# EUROPEAN PATENT SPECIFICATION

(11) **EP 2 142 763 B1**
(45) Date of publication and mention of the grant of the patent: **28.12.2016**
(21) Application number: 08718976.7
(22) Date of filing: 03.04.2008
(51) Int. Cl.: F01D 25/28, F16M 5/00, H02K 15/14

(54) **METHOD OF ASSEMBLING A MOUNTING FRAME**
VERFAHREN ZUR MONTAGE EINES BEFESTIGUNGSRAHMENS
PROCÉDÉ D'ASSEMBLAGE D'UN CADRE DE MONTAGE

(30) Priority: 04.04.2007 GB 0706629
(43) Date of publication of application: 13.01.2010
(73) Proprietor: Cummins Power Generation Limited, Ramsgate, Kent CT12 5BS (GB)
(72) Inventor: SIMON, Kevan, John, Kent CT12 5BF (GB)
(74) Representative: Williams, Michael Ian
(86) International application number: PCT/GB2008/001169
(87) International publication number: WO 2008/122764

(56) References cited:
- DE-A1- 3 402 752
- DE-B- 1 188 867
- US-B1- 6 405 992

## Description

This invention relates to a method of assembling a mounting frame for a machine such as a generator.

Applications exist whereby it is required to fix various elements of a machine onto a mounting frame or bed frame. For example, a machine such as a generator comprises an engine and an alternator which need to be carefully aligned, and thus must be mounted in a fixed relationship to each other. Furthermore, components such as these which are large and heavy, and which are subject to vibration in use, need to be mounted on flat and level surfaces in order to reduce stress caused to the components in use.

A bed frame for a generator typically has a number of pads for mounting the engine and a further number of pads for mounting the alternator. Such a bed frame was previously produced by attaching mounting pads to mounting components, and welding the mounting components onto main frame members such as side beams. With this method, it is then necessary to machine the top surfaces of the mounting pads to make them flat and level, and also to ensure that they are correctly positioned relative to each other. This process has to be carried out according to fixed critical dimensions. This has resulted in an expensive machining process which requires an operator to follow detailed instructions accurately.

This invention aims to provide an improved method of assembling a mounting frame.

DE 1 188 867 discloses a method of manufacturing a baseplate for a centrifugal pump and an electric motor which drives the pump. A number of U-shaped supports are welded to a plate. Each of the supports has a foot piece inserted between its parallel walls. The foot pieces are arranged so that their height can be adjusted relative to the supports. The plate on which the supports have already been welded is then placed in a device consisting of a ground plate, a cover plate, and adjustable spacers. One or more magnets are arranged on the inner side of the cover plate. The magnets attract the foot pieces, such that the foot pieces lie with their surfaces against the magnets. The foot pieces can then be fixed in place in the supports by spot welding.

DE 34 02 752 discloses a baseplate for machines such as a centrifugal pump driven by an electric motor. Telescopically displaceable compensating pieces are used for mounting the machines. The telescopically displaceable compensating pieces consist of tubular pieces which are welded together after alignment.

US 6 405 992 discloses a method of manufacturing a base plate for rotating machinery such as pump and electric motor assemblies. The base plate is formed as a generally rectangular parallelepiped structure with one side open. The method comprises pregrouting the baseplate before installation, curing the grout and machining the mounting surfaces for the rotating machinery before field installation to ensure precise alignment of the pump and motor shafts.

According to a first aspect of the present invention there is provided a method of assembling a mounting frame for a generator, as defined in claim 1.

According to a second aspect of the present invention there is provided an assembly comprising a mounting frame for a generator, and a rigid fixing member for assembling the mounting frame, as defined in claim 4.

Preferred features of the present invention are recited in the dependent claims.

Thus the frame is constructed whilst the mounting surfaces are held in fixed relation by the fixture, such that when the fixture is removed the mounting surfaces will be in the correct relative positions. No further machining is required.

The mounting surfaces may be positioned by abutting them against the locating surfaces. The mounting surfaces may be provided on mounting pads. Their positions may be fixed by bonding them to mounting members of the frame, and bonding the mounting members together, for example by welding.

The mounting members may be fixed together indirectly, for example by fixing them each to further mounting frame members, such as cross members and side beams.

In order that the invention may be more readily understood, reference will now be made to the accompanying drawings, in which:

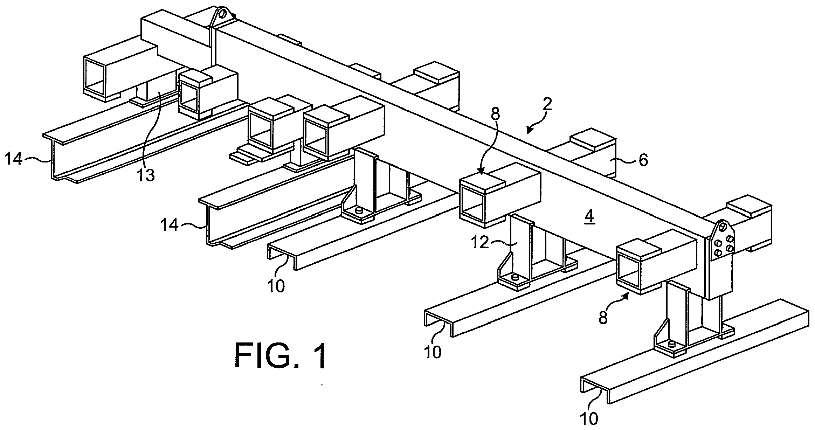

Figures 1 to 7 show progressive stages of assembling a mounting frame using a fixture member according to one embodiment of the invention assembly method.

Referring to Figure 1, a rigid fixture member 2 comprises a central box beam 4 and cross beams 6 carrying locating surfaces 8. These surfaces 8 may be sprayed with anti-spatter compound to avoid spatter during the assembly process. Engine cross members 10 are then assembled to the central beam 4 of the fixture member 2 on pillars 12.

Similarly, alternator cross members 14 are mounted to the fixture member 2 on pillars 13.

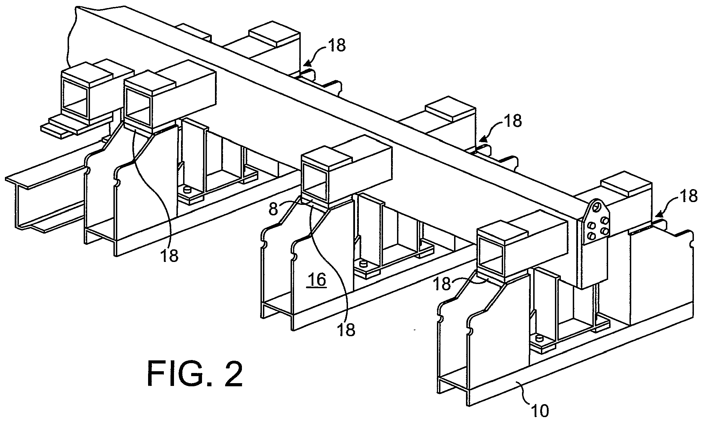

Referring now to Figure 2, engine pads 18 to provide mounting surfaces for the engine are assembled to the locating surfaces 8 of the fixture member.

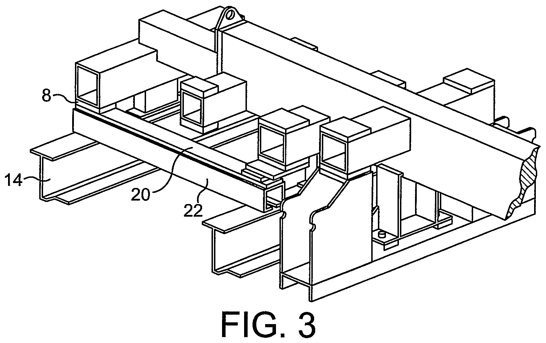

These are used to locate the engine mounts 16, which are then welded to the engine cross members 10. In a similar manner, and referring to figure 3, alternator pads 20 are assembled to mounting surfaces 8 and used to locate alternator mounts 22. The alternator mounts are then attached to the alternator cross members 14.

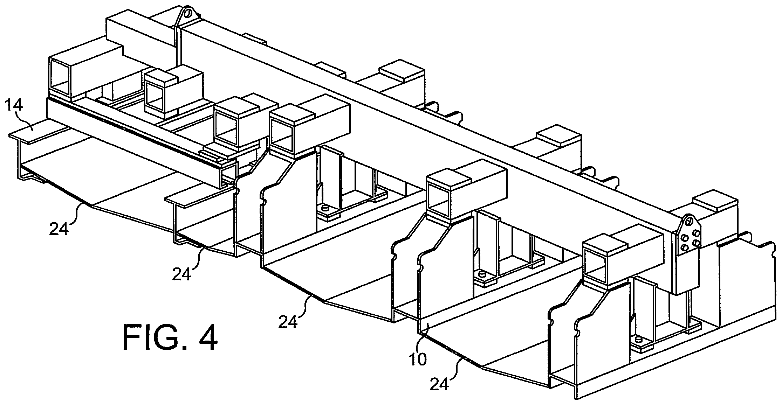

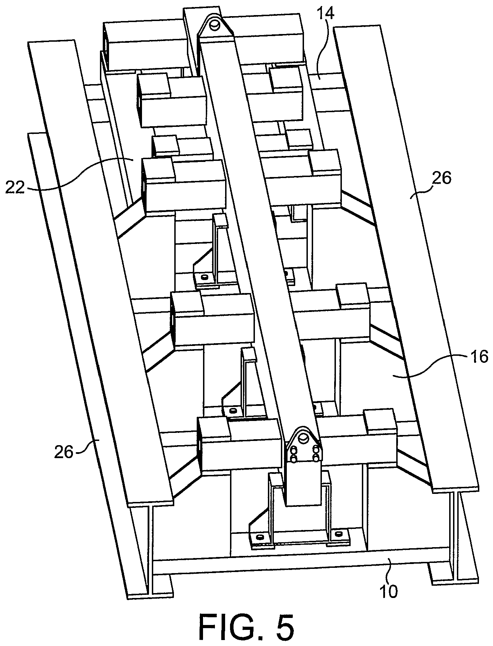

Referring to Figure 4, drip trays 24 may be welded between the cross members 10, 14. A pair of rail skids 26 extending along the sides of the mounting frame are then welded to the ends of each cross member 10,14 as shown in Figure 5. The engine mounts 16 and alternator mounts 22 are therefore fixed together by the cross members 10,14 and the rail skids 26 to form the mounting frame 31.

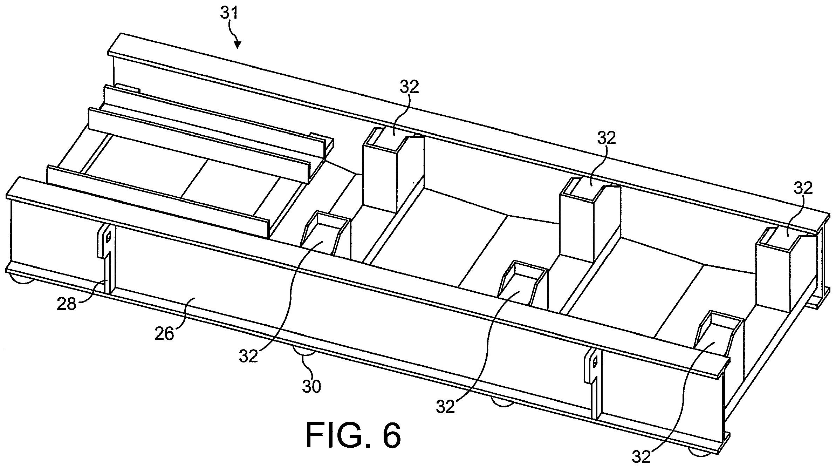

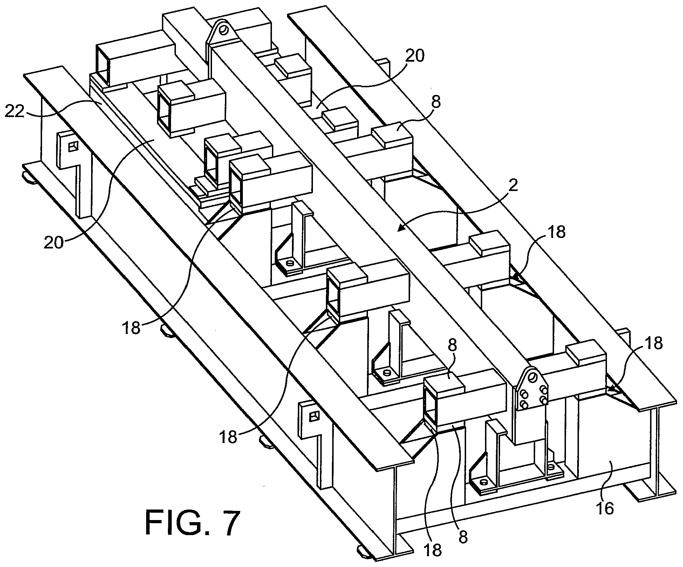

Referring to Figure 6, it is now possible to remove the fixture member 2 for completing assembly of the mounting frame 31, for example by attaching lifting eyes 28 to the rail skids 26, and attaching pad mounts 30, and plate engine supports 32. With the fixture member back in position (see Figure 7) the engine pads 18 and alternator pads 20 may be welded to the mounts 16, 22. The fixture member 2 together with the locating surfaces 8 is then removed, leaving the engine pads 18 and alternator pads 20 in the correct positions for mounting the engine and alternator.

## Claims

1. A method of assembling a mounting frame (31) for a generator comprising an engine and an alternator, the frame comprising a plurality of mounting surfaces (18, 20) for the generator, the method comprising:
providing a rigid fixture member (2) comprising a central beam (4) and cross beams (6) having a plurality of locating surfaces (8) thereon, the locating surfaces being in fixed spatial relation to each other;
assembling engine cross members (10) to the central beam (4) on pillars (12);
assembling alternator cross members (14) to the central beam (4) on pillars (13);
positioning engine pads (18) for providing mounting surfaces for the engine against respective locating surfaces (8) of the fixture member (2);
using the engine pads (18) to locate engine mounts (16);
welding
the engine mounts (16) to the engine cross members (10);
positioning alternator pads (20) for providing mounting surfaces for the alternator against respective locating surfaces (8) of the fixture member (2);
using the alternator pads (20) to locate alternator mounts (22);
attaching the alternator mounts (22) to the alternator cross members (14) ;
attaching a pair of cross rails (26) to the ends of each of the cross members (10, 14), thereby to form the mounting frame (31); and
removing the fixture member (2) to expose the mounting surfaces of the mounting frame (31).

2. A method as claimed in claim 1, in which the positions of the engine pads (18) are fixed by attaching them to the engine mounts (16) and the positions of the alternator pads (20) are fixed by attaching them to the alternator mounts (22).

3. A method according to claim 1 or 2, further comprising attaching a drip tray (24) between a pair of cross members (10, 14).

4. An assembly comprising a mounting frame (31) for a generator comprising an engine and an alternator, the frame comprising a plurality of mounting surfaces (18, 20) for the generator, and a rigid fixing member (2) for assembling the mounting frame, wherein:
the rigid fixture member (2) comprises a central beam (4) and cross beams (6) having a plurality of locating surfaces (8) thereon, the locating surfaces being in fixed spatial relation to each other;
the engine cross members (10) are assembled to the central beam (4) on pillars (12);
the alternator cross members (14) are assembled to the central beam (4) on pillars (13);
engine pads (18) for providing mounting surfaces for the engine are positioned against respective locating surfaces (8) of the fixture member (2);
the engine pads (18) are used to locate engine mounts (16);
the engine mounts (16) are attached to the engine cross members (10);
alternator pads (20) for providing mounting surfaces for the alternator are positioned against respective locating surfaces (8) of the fixture member (2);
the alternator pads (20) are used to locate alternator mounts (22);
the alternator mounts (22) are attached to the alternator cross members (14) ; and
a pair of cross rails (26) is attached to the ends of each of the cross members (10, 14), thereby forming the mounting frame (31).

## Patentansprüche

1. Verfahren zum Montieren eines Befestigungsrahmens (31) für einen Generator, der einen Antriebsmotor und einen Wechselstromgenerator aufweist, wobei der Rahmen eine Mehrzahl von Befestigungsflächen (18, 20) für den Generator aufweist, wobei das Verfahren beinhaltet:
Bereitstellen eines starren Aufspannelementes (2), das einen Mittelholm (4) und Querholme (6) aufweist, auf denen sich eine Mehrzahl von Positionierflächen befinden, wobei die Positionierflächen in fester räumlicher Beziehung zueinander angeordnet sind;
Montieren von Querträgern (10) des Antriebsmotors an dem Mittelholm (4) auf Stützpfeilern (12);
Montieren von Querträgern (14) des Wechselstromgenerators an dem Mittelholm (4) auf Stützpfeilern (13);
Positionieren von Antriebsmotor-Auflagerklötzen (18), die Befestigungsflächen für den Antriebsmotor bereitstellen, gegen jeweilige Positionierungsflächen (8) des Aufspannelementes (2);
Verwenden der Antriebsmotor-Auflagerklötze (18), um Antriebsmotor-Lagerböcke (16) zu positionieren;
Verschweißen der Antriebsmotor-Lagerböcke (16) mit den Antriebsmotor-Querträgern (10);
Positionieren von Wechselstromgenerator-Auflagerklötzen (20), die Befestigungsflächen für den Wechselstromgenerator bereitstellen, gegen jeweilige Positionierungsflächen (8) des Aufspannelementes (2);
Verwenden der Wechselstromgenerator-Auflagerklötze (20), um Wechselstrom-generator-Lagerböcke (22) zu positionieren;
Befestigen der Wechselstromgenerator-Lagerböcke (22) an den Wechselstrom-generator-Querträgern (14);
Befestigen eines Paares von Querschienen (26) an den Enden eines jeden der Querträger (10, 14), wodurch der Befestigungsrahmen (31) gebildet wird; und
Entfernen des Aufspannelementes (2), um die Befestigungsflächen des Befestigungsrahmens (31) freizulegen.

2. Verfahren nach Anspruch 1, wobei die Positionen der Antriebsmotor-Auflagerklötze (18) dadurch festgelegt sind, dass sie an den Antriebsmotor-Lagerböcken (16) befestigt werden, und die Positionen der Wechselstromgenerator-Auflagerklötze (20) dadurch festgelegt sind, dass diese an den Wechselstromgenerator-Lagerböcken (22) befestigt werden.

3. Verfahren nach Anspruch 1 oder 2, weiter beinhaltend das Befestigen einer Tropfwanne (24) zwischen einem Paar von Querträgern (10, 14).

4. Anordnung, aufweisend einen Befestigungsrahmen (31) für einen Generator, der einen Antriebsmotor und einen Wechselstromgenerator beinhaltet, wobei der Rahmen eine Mehrzahl von Befestigungsflächen (18, 20) für den Generator und ein starres Aufspannelement (2) für das Montieren des Befestigungsrahmens beinhaltet, wobei:
das starre Aufspannelement (2) einen Mittelholm (4) und Querholme (6) aufweist, auf denen sich eine Mehrzahl von Positionierflächen befinden, wobei die Positionierflächen in fester räumlicher Beziehung zueinander angeordnet sind;
die Querträger (10) des Antriebsmotors an dem Mittelholm (4) auf Stützpfeilern (12) montiert sind;
die Querträgern (14) des Wechselstromgenerators an dem Mittelholm (4) auf Stützpfeilern (13) montiert sind;
Antriebsmotor-Auflagerklötze (18), die Befestigungsflächen für den Antriebsmotor bereitstellen, gegen jeweilige Positionierungsflächen (8) des Aufspannelementes (2) positioniert sind;
die Antriebsmotor-Auflagerklötze (18) verwendet werden, um Antriebsmotor-Lagerböcke (16) zu positionieren;
die Antriebsmotor-Lagerböcke (16) an den Antriebsmotor-Querträgern (10) befestigt sind;
Wechselstromgenerator-Auflagerklötze (20), die Befestigungsflächen für den Wechselstromgenerator bereitstellen, gegen jeweilige Positionierungsflächen (8) des Aufspannelementes (2) positioniert sind;
die Wechselstromgenerator-Auflagerklötze (20) verwendet werden, um Wechselstromgenerator-Lagerböcke (22) zu positionieren;
die Wechselstromgenerator-Lagerböcke (22) an den Wechselstromgenerator-Querträgern (14) befestigt sind; und
ein Paar von Querschienen (26) an den Enden eines jeden der Querträger (10, 14) befestigt ist, wodurch der Befestigungsrahmen (31) gebildet wird.

## Revendications

1. Procédé d'assemblage d'un cadre de montage (31) pour un générateur comprenant un moteur et un alternateur, le cadre comprenant une pluralité de surfaces de montage (18, 20) pour le générateur, le procédé comprenant les étapes consistant à :
fournir un élément de fixation rigide (2) comprenant une poutre centrale (4) et des poutres transversales (6) ayant une pluralité de surfaces de positionnement (8) sur celles-ci, les surfaces de positionnement étant dans une relation spatiale fixe les unes par rapport aux autres ;
assembler des éléments transversaux de moteur (10) et la poutre centrale (4) sur des piliers (12) ;
assembler des éléments transversaux d'alternateur (14) et la poutre centrale (4) sur des piliers (13) ;
positionner des patins de moteur (18) pour fournir des surfaces de montage pour le moteur contre des surfaces de positionnement respectives (8) de l'élément de fixation (2) ;
utiliser les patins de moteur (18) pour positionner des montures de moteur (16) ;
souder les montures de moteur (16) sur les éléments transversaux de moteur (10) ;
positionner des patins d'alternateur (20) pour fournir des surfaces de montage pour l'alternateur contre des surfaces de positionnement respectives (8) de l'élément de fixation (2) ;
utiliser les patins d'alternateur (20) pour positionner des montures d'alternateur (22) ;
attacher les montures d'alternateur (22) sur les éléments transversaux d'alternateur (14) ;
attacher une paire de rails transversaux (26) aux extrémités de chacun des éléments transversaux (10, 14), pour former ainsi le cadre de montage (31) ; et
enlever l'élément de fixation (2) pour exposer les surfaces de montage du cadre de montage (31).

2. Procédé selon la revendication 1, dans lequel les positions des patins de moteur (18) sont fixées en les attachant aux montures de moteur (16), et les positions des patins d'alternateur (20) sont fixées en les attachant aux montures d'alternateur (22).

3. Procédé selon la revendication 1 ou 2, comprenant en outre la fixation d'un bac de récupération (24) entre une paire d'éléments transversaux (10, 14).

4. Assemblage comprenant un cadre de montage (31) pour un générateur comprenant un moteur et un alternateur, le cadre comprenant une pluralité de surfaces de montage (18, 20) pour le générateur, et un élément de fixation rigide (2) pour assembler le cadre de montage, dans lequel :
l'élément de fixation rigide (2) comprend une poutre centrale (4) et des poutres transversales (6) ayant une pluralité de surfaces de positionnement (8) sur celles-ci, les surfaces de positionnement étant dans une relation spatiale fixe les unes par rapport aux autres ;
les éléments transversaux de moteur (10) sont assemblés avec la poutre centrale (4) sur des piliers (12) ;
les éléments transversaux d'alternateur (14) sont assemblés avec la poutre centrale (4) sur des piliers (13) ;
des patins de moteur (18) pour fournir des surfaces de montage pour le moteur sont positionnés contre des surfaces de positionnement respectives (8) de l'élément de fixation (2) ;
les patins de moteur (18) sont utilisés pour positionner des montures de moteur (16) ;
les montures de moteur (16) sont attachées aux éléments transversaux de moteur (10) ;
des patins d'alternateur () pour fournir des surfaces de montage pour l'alternateur sont positionnés contre des surfaces de positionnement respectives (8) de l'élément de fixation (2) ;
les patins d'alternateur (20) sont utilisés pour positionner des montures d'alternateur (22) ;
les montures d'alternateur (22) sont attachées aux éléments transversaux d'alternateur (14) ; et
une paire de rails transversaux (26) est attachée aux extrémités de chacun des éléments transversaux (10, 14), pour former ainsi le cadre de montage (31).
